# EUROPÄISCHE PATENTSCHRIFT

(11) **EP 4 088 038 B1**
(45) Veröffentlichungstag und Bekanntmachung des Hinweises auf die Patenterteilung: **04.12.2024**
(21) Anmeldenummer: 21700119.7
(22) Anmeldetag: 07.01.2021
(51) Int. Cl.: F04D 29/44

(54) **ABSTRÖMBEREICH EINES VERDICHTERS, VERDICHTER MIT EINEM SOLCHEN ABSTRÖMBEREICH, UND TURBOLADER MIT DEM VERDICHTER**
DISCHARGE SECTION OF A COMPRESSOR, COMPRESSOR COMPRISING SUCH A DISCHARGE SECTION AND TURBOCHARGER COMPRISING SAID COMPRESSOR
ZONE D'ÉCOULEMENT D'UN COMPRESSEUR, COMPRESSEUR DOTÉ D'UNE TELLE ZONE D'ÉCOULEMENT ET TURBOCOMPRESSEUR DOTÉ DU COMPRESSEUR

(30) Priorität: 07.01.2020 EP 20150566
(43) Veröffentlichungstag der Anmeldung: 16.11.2022
(73) Patentinhaber: Turbo Systems Switzerland Ltd., 5400 Baden (CH)
(72) Erfinder: RUSCH, Daniel, 5430 Wettingen (CH)
(74) Vertreter: Zimmermann & Partner Patentanwälte mbB
(86) Internationale Anmeldenummer: PCT/EP2021/050171
(87) Internationale Veröffentlichungsnummer: WO 2021/140142

(56) Entgegenhaltungen:
- EP-A1- 3 564 537
- DE-A1- 102014 012 765
- DE-A1- 102015 103 615
- DE-C- 724 553
- US-A- 3 289 921

## Beschreibung

### TECHNISCHES GEBIET

Die Erfindung bezieht sich auf das Gebiet der Verdichter, insbesondere der Radialverdichter und Diagonalverdichter. Insbesondere betrifft die Erfindung einen Abströmbereich stromab eines Verdichterrades und stromauf eines Diffusorbereichs eines solchen Verdichters.

### TECHNISCHER HINTERGRUND

Für die Leistungssteigerung einer Brennkraftmaschine werden heutzutage standardmäßig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Verdichter, insbesondere von Radial- oder Diagonalverdichtem, mit hochschluckenden Verdichterräder weisen hohe Verhältnisse des Verdichterradeintrittsradius R₁ zum Verdichterradaustrittsradius R₂ auf, z. B. R₁/R₂ > 0,75. Typischerweise wird die Strömung im Impeller-, respektive im Impeller- und Diffusorbereich, in radiale Richtung umgelenkt, was eine starke Strömungsumlenkung und eine starke Krümmung der Shroud-Kontur bedingt.

Des Weiteren werden typischerweise zudem hohe Druckverhältnisse gefordert, so dass das Verdichterrad-Nabendesign vorzugsweise schlank gestaltet werden sollte, um die Fliehkraftbelastung unterhalb der mechanischen Materialgrenzen zu halten. Eine schlank gestaltete Nabe führt typischerweise zu einem geringen Austrittswinkel der Verdichterrad-HubKontur (zur Radialen gemessen).

Wird der Meridionalkanal im Diffusor konventionell ausgeführt (z.B. rein radial am Hub und mit Pinch (krümmungsstetig) an der Shroud), so führt dies zunächst zu einer starken Verjüngung des Strömungsquerschnitts stromab des Verdichterradaustritts. Dies führt typischerweise zu einer Erhöhung der Eintrittsmachzahl in den Diffusor, insbesondere an den Vorderkanten der Diffusorschaufeln. Um dies zu vermeiden kann der Diffusor, insbesondere die Diffusorschaufeln, weiter stromab angeordnet werden. Eine andere aus dem Stand der Technik bekannte Abhilfemaßnahmen ist beispielsweise ein Kanalrücksprung an der Hubkontur. Es hat sich jedoch herausgestellt, dass die bekannten Lösungen gewisse Nachteile bezüglich des Wirkungsgrades, des Bauvolumens und der Kosten des Verdichters mit sich bringen.

Zum Stand der Technik wird auf die Druckschriften EP 3 564 537 A1 und US 3 289 921 A verwiesen. Die Druckschrift EP 3 564 537 A1 betrifft einen Zentrifugalkompressor mit einem Diffusor, umfassend eine Mantelwandfläche, die sich in der radialen Richtung einer Drehwelle erstreckt, und eine Nabenwandfläche, die sich in der radialen Richtung erstreckt und der Mantelwandfläche auf der stromabwärtigen Seite einer Strömung in der axialen Richtung der Drehwelle 3 gegenüberliegt, wobei die Nabenwandfläche einen Spalt zwischen sich und der Mantelwandfläche aufweist und mit diesem Spalt einen ringförmigen Diffusorströmungsweg bildet, durch den ein Fluid strömt. Ein nabenseitiger konvexer Abschnitt ist über dem gesamten Umfang der nabenseitigen Wandfläche ausgebildet, wobei der nabenseitige konvexe Abschnitt in Richtung der Seite der Mantelwandfläche relativ zu einer geraden Linie vorsteht, die ein Anfangsende auf einer Einlassseite des Diffusorströmungswegs und ein Abschlussende auf einer Auslassseite des Diffusorströmungswegs verbindet. Die Druckschrift US 3 289 921 A betrifft einen schaufellosen Diffusor für eine Radialströmungs-Turbomaschine, wobei der Diffusor ein Paar von axial beabstandeten ringförmigen Wänden um den Umfang eines Laufrads herum umfasst und einen schaufellosen Diffusor-Strömungsdurchgang um diesen herum definiert. Der radial innere Abschnitt der axial beabstandeten Wände definiert einen Eintrittsabschnitt für gepumptes Fluid in den Diffusor-Durchgang. Der radial äußere Abschnitt definiert einen Auslasspunkt, an dem das gepumpte Fluid in einen umgebenden Sammler in einer ungehinderten Weise eintritt, wobei die Wände des Eintrittsabschnitts einen ersten konvergierenden Bereich zu einer Verengung definieren, um das Fluid zu beschleunigen und die Turbulenz in der Fluidströmung zu verringern. Die axial beabstandeten Wände definieren einen divergierenden zweiten Abschnitt des Strömungsdurchgangs, um einen Bereich mit zunehmendem Querschnitt zu einem Punkt in der stromabwärts gerichteten Strömung zu definieren, an dem eine Grenzschichttrennung von den axial beabstandeten Wänden in dem zweiten Abschnitt des Strömungsdurchgangs unmittelbar bevorsteht. Die axial beabstandeten Wände definieren einen dritten Abschnitt des Strömungskanals, der mit dem zweiten Abschnitt in Verbindung steht und sich stromabwärts des zweiten Abschnitts des Strömungskanals bis zum Punkt des Auslasses daraus erstreckt. Die axial beabstandeten Wände des dritten Abschnitts definieren ein Mittel zum Aufrechterhalten des Zustands der unmittelbar bevorstehenden Grenzschichtablösung von den Wänden über den gesamten dritten Abschnitt des Strömungskanals.

### KURZE DARSTELLUNG DER ERFINDUNG

Die Aufgabe der vorliegenden Erfindung besteht darin, einen Abströmbereich eines Verdichters, einen Verdichter und einen Turbolader bereitzustellen, die mindestens hinsichtlich einer der aus dem Stand der Technik bekannten Nachteile verbessert ist.

Zur Lösung der obengenannten Aufgaben wird ein Abströmbereich eines Verdichters, insbesondere eines Radialverdichters oder Diagonalverdichters, gemäß dem unabhängigen Anspruch 1 bereitgestellt. Ferner wird ein Verdichter mit einem Abströmbereich gemäß den hierein beschriebenen Ausführungsarten sowie ein Turbolader mit einem derartigen Verdichter bereitgestellt.

Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird ein Abströmbereich eines Verdichters, insbesondere eines Radialverdichters oder Diagonalverdichters, bereitgestellt. Der Abströmbereich umfasst einen Strömungskanal, welcher von einer shroudseitigen Seitenwand und einer nabenseitigen Seitenwand begrenzt wird: Die nabenseitige Seitenwand weist in einem Bereich des Verdichterradaustritts eine Kontur auf, die derart ausgebildet ist, dass die Querschnittsflächen des Strömungskanals in Strömungsrichtung abnehmen, ein Minimum durchlaufen und wieder zunehmen. Der Strömungskanal weist im Bereich des Verdichterradaustritts eine Länge L auf, die sich von einer Verdichterradaustrittskante bis zu einer Diffusorschaufeleintrittskante eines Diffusorbereichs erstreckt. Der Diffusorbereich schließt sich an den Bereich des Verdichterradaustritts an und weist eine Vielzahl von Diffusorschaufeln auf.

Somit wird vorteilhafterweise ein Abströmbereich bereitgestellt, der gegenüber dem Stand der Technik verbessert ist. Insbesondere, lässt sich durch die Variabilität der nabenseitige Seitenwandkontur ein vorteilhafter Querschnittsverlauf (Abnahme - Minimum - Zunahme) des Strömungskanals realisieren so dass sich die Strömung stromauf eines Diffusorbereichs stärker verzögern lässt, ohne dass sich die Strömung an der Shroud-Seite ablöst. Vorteilhafterweise, kann die Krümmung an der Shroud zunächst kontrolliert werden und anschließend der Querschnittsflächenverlauf über die HubKontur (Kontur der nabenseitigen Seitenwand) eingestellt werden. Dies führt zu einer kompakteren Bauweise und zu höheren Wirkungsgraden. Somit kann durch den erfindungsgemäßen Abströmbereich die Strömungsablösungsgefahr reduziert werden, was sich vorteilhaft auf dem Wirkungsgrad des Verdichters auswirkt. Insbesondere kann durch den erfindungsgemäßen Abströmbereich vorteilhafterweise die Verdichterradaustrittsströmung innerhalb eines kompakten Bauraums stark verzögert und vergleichmäßigt werden, ohne dass die Strömung beim Androsseln vorzeitig zum Ablösen / zur Instabilität neigt.

Gemäß einem zweiten Aspekt der Erfindung wird ein Verdichter, insbesondere ein Radialverdichter oder ein Diagonalverdichter, bereitgestellt der ein Verdichterrad und einen Abströmbereich gemäß den hierein beschriebenen Ausführungsformen umfasst. Somit kann vorteilhafterweise ein Verdichter mit verbessertem Wirkungsgrad bereitgestellt werden.

Gemäß einem dritten Aspekt der Erfindung wird ein Turbolader mit einem Verdichter gemäß den hierein beschriebenen Ausführungsformen, so dass vorteilhafterweise ein Turbolader bereitgestellt wird der gegenüber dem Stand der Technik verbessert ist.

### KURZBESCHREIBUNG DER FIGUREN

Im Weiteren soll die Erfindung anhand von in Figuren dargestellten Ausfiihrungsbeispielen erläutert werden, aus denen sich weitere Vorteile und Abwandlungen ergeben. Hierbei zeigen:
- Figur 1: eine schematische Ansicht eines Abströmbereichs eines Verdichters, insbesondere eines Diagonalverdichters, gemäß hierin beschriebenen Ausführungsforrnen; und
- Figuren 2 bis 5: schematische Ansichten eines Abströmbereichs eines Verdichters gemäß weiteren hierin beschriebenen Ausführungsformen, wobei in den Figuren 2 und 5 ein Diagonalverdichter und in den Figuren 3 und 4 ein Radialverdichter dargestellt ist.

### DETAILLIERTE BESCHREIBUNG DER FIGUREN

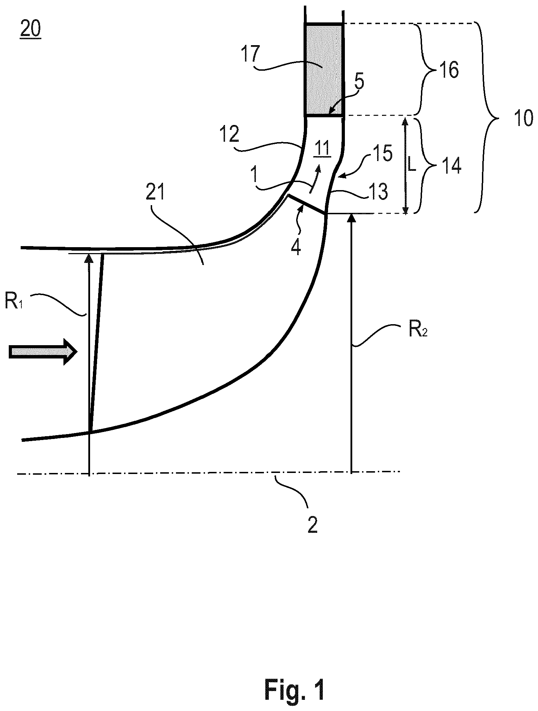

Mit Bezugnahme auf die Figuren 1 bis 5 wird ein Abströmbereich 10 eines Verdichters 20 sowie ein Verdichter 20 gemäß der vorliegenden Offenbarung beschrieben. Der Verdichter kann ein Radialverdichter oder eine Diagonalverdichter sein. Gemäß einer Ausführungsform, die mit anderen hierin beschriebenen Ausführungsformen kombiniert werden kann, umfasst der Abströmbereich 10 einen Strömungskanal 11, welcher von einer shroudseitigen Seitenwand 12 und einer nabenseitigen Seitenwand 13 begrenzt wird. Die nabenseitige Seitenwand 13 weist in einem Bereich 14 des Verdichterradaustritts eine Kontur auf, die derart ausgebildet ist, dass die Querschnittsflächen, insbesondere die meridionalen Querschnittsflächen, des Strömungskanals in Strömungsrichtung 1 abnehmen, ein Minimum durchlaufen und wieder zunehmen. Mit anderen Worten, die nabenseitige Seitenwand 13 ist derart ausgebildet, dass sich der Strömungsquerschnitt des Strömungskanals 11 in Strömungsrichtung 1 verjüngt, ein Minimum durchläuft und vor Eintritt in einen Diffusorbereich 16 wieder aufweitet. Insbesondere, ist der Konturverlauf der nabenseitigen Seitenwand 13 derart ausgebildet, dass der Abstand zur gegenüberliegenden shroudseitigen Seitenwand 12 in Strömungsrichtung 1 abnimmt, ein Minimum durchläuft und anschließend wieder zunimmt. Der Strömungskanal 11 weist im Bereich 14 des Verdichterradaustritts eine Länge L auf, wie es in den Figuren 1 bis 5 dargestellt ist. Die Länge L des Strömungskanals 11 erstreckt sich von einer Verdichterradaustrittskante 4 bis zu einem Eintritt 5 in den Diffusorbereich 16, insbesondere bis zu einer Diffusorschaufeleintrittskante des Diffusorbereichs 16 erstreckt. Der Diffusorbereich 16 schließt sich an den Bereich 14 des Verdichterradaustritts an und weist eine Vielzahl von Diffusorschaufeln 17 auf,

Somit kann die Strömung nach dem Verdichterrad zunächst vergleichmässigt, anschließend stärker verzögert und eine Strömungsablösungsgefahr reduziert werden, was sich vorteilhaft auf den Wirkungsgrad, das Bauvolumen und die Kosten des Verdichters auswirkt.

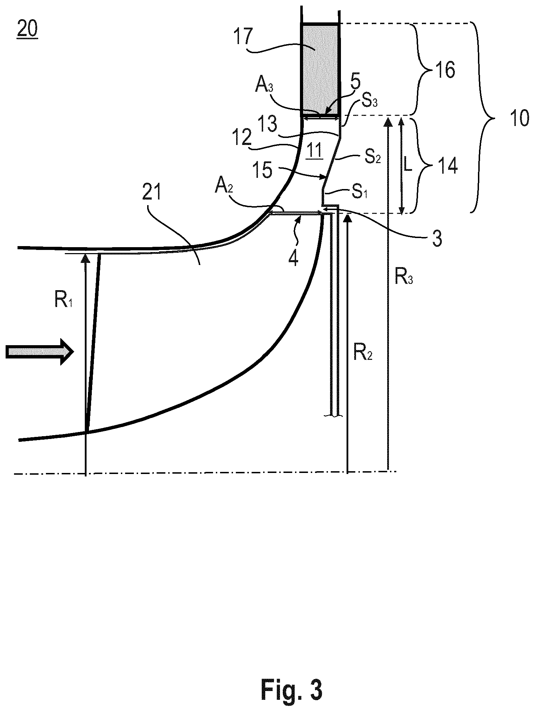

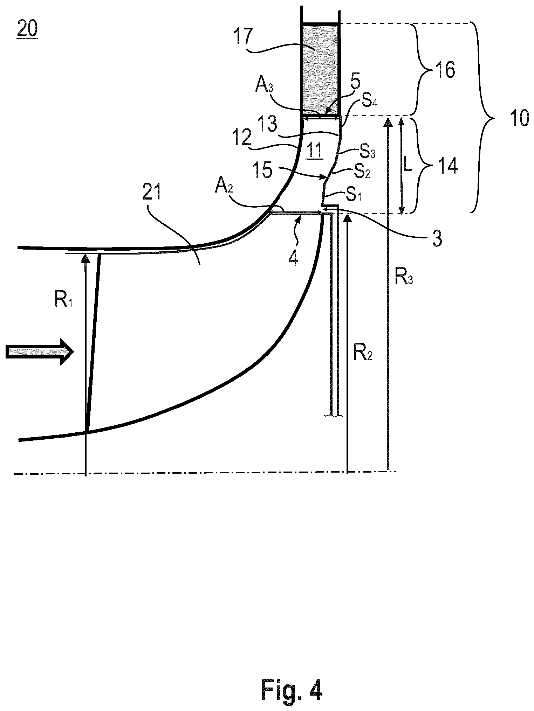

Gemäß einer Ausführungsform, die mit anderen hierin beschriebenen Ausführungsformen kombiniert werden kann, weist die die Kontur der nabenseitigen Seitenwand 13 einen S-Schlag artigen Bereich 15 auf. Insbesondere, weist die die Kontur der nabenseitigen Seitenwand einen S-Schlag-artigen Meridionalkonturverlauf zwischen Verdichterradaustritt und Diffusoreintritt auf. Der S-Schlag artige Bereich 15 kann beispielsweise durch mindestens drei Segmente S₁, S₂ und S₃ ausgebildet sein, wie es exemplarisch in Figur 3 dargestellt ist. Figur 4 zeigt eine beispielhafte Ausführungsform mit vier Segmenten S₁, S₂, S₃ und S₄. Die Segmente können Liniensegmente und/oder Kurvensegmente sein. Somit ist zu verstehen, dass der S-Schlag artige Bereich 15 durch eine polygonartige S-Kontur bereitgestellt werden kann. Alternativ kann der S-Schlag artige Bereich 15 auch einen stetigen Konturverlauf aufweisen. Der Konturverlauf kann tangentenstetig oder nicht-tangentenstetig sein. Beispielsweise, kann der S-Schlag artige Bereich 15 in Strömungsrichtung eine Rechtskrümmung und eine Linkskrümmung aufweisen, wie es beispielhaft in den Figuren 1, 2 und 5 dargestellt ist. Mit anderen Worten, der S-Schlag artige Bereich 15 kann eine zur shroudseitigen Seitenwand 12 zeigende konvexe Krümmung und eine konkave Krümmung aufweisen. Insbesondere weist der S-Schlag artige Bereich 15 in Strömungsrichtung nach dem Verdichterradaustritt zunächst eine zur shroudseitigen Seitenwand 12 zeigende konvexe Krümmung und anschließend eine zur shroudseitigen Seitenwand 12 zeigende konkave Krümmung auf. Typischerweise ist die shroudseitige Seitenwand 12 im Bereich des Verdichterradaustritts ausschließlich konvex gegenüber der nabenseitigen Seitenwand 13 ausgebildet. Insbesondere, ist die shroudseitige Seitenwand 12 vom Verdichterradaustritt bis zum Eintritt in den Diffusorbereich auschließlich konvex gegenüber der nabenseitigen Seitenwand 13 ausgebildet.

Gemäß einer Ausführungsform, die mit anderen hierin beschriebenen Ausführungsformen kombiniert werden kann, weist die nabenseitige Seitenwand 13 im Bereich 14 des Verdichterradaustritts einen stetigen Konturverlauf auf, wie es beispielhaft in den Figuren 1, 2 und 5 dargestellt ist. Alternativ oder zusätzlich kann die shroudseitige Seitenwand 12 im Bereich 14 des Verdichterradaustritts einen stetigen Konturverlauf aufweisen, wie es in den Figuren 1 bis 5 gezeigt ist. Typischerweise, ist die shroudseitige Seitenwand 12 in Strömungsrichtung 1 linksgekrümmt.

Gemäß einer Ausführungsform, die mit anderen hierin beschriebenen Ausführungsformen kombiniert werden kann, ist der S-Schlag artige Bereich 15 näher an der Verdichterradaustrittskante 4 als am Eintritt 5 des Diffusorbereichs angeordnet. Beispielsweise, kann der S-Schlag artige Bereich 15 nach der Verdichterradaustrittskante innerhalb 50% der Länge L des Strömungskanals 11 angeordnet sein. Typischerweise ist der durch den S-Schlag bereitgestellte Krümmungswechsel der nabenseitige Seitenwand 13 näher an der Verdichterradaustrittskante 4 als am Eintritt 5 des Diffusorbereichs angeordnet. Der Ort des Krümmungswechsels ist der Wendepunkt an dem eine von der zur shroudseitigen Seitenwand 12 zeigenden konvexen Krümmung der nabenseitige Seitenwand 13 in eine zur shroudseitigen Seitenwand 12 zeigende konkave Krümmung der nabenseitige Seitenwand 13 übergeht. Im Speziellen ist der Ort des Krümmungswechsels derjenige Ort an dem die Krümmung einen Vorzeichenwechsel vollzieht. Insbesondere kann das Strömungsquerschnittsminimum, das durch den S-Schlag artigen Bereich 15 des Strömungskanals 11 gebildet wird, innerhalb 50% der Länge L des Strömungskanals 11 nach der Verdichterradaustrittskante angeordnet sein. Mit anderen Worten, typischerweise ist das Strömungsquerschnittsminimum näher an der Verdichterradaustrittskante 4 als am Eintritt 5 des Diffusorbereichs angeordnet.

Gemäß einer Ausführungsform, die mit anderen hierin beschriebenen Ausführungsformen kombiniert werden kann, weist der Strömungskanal 11 eine Verdichterradaustrittsquerschnittsfläche A₂ und eine Diffusoreintrittsquerschnittsfläche A₃ auf, wobei ein Verhältnis A₃/A₂ aus einem Bereich von 0,80 ≤ A₃/A₂ ≤ 1,2, insbesondere aus einem Bereich von 0,90 ≤ A₃/A₂ ≤ 1,1, ausgewählt ist. Typischerweise ist die Verdichterradaustrittsquerschnittsfläche A₂, eine Zylinderfläche (bei parallel zur Rotationsachse verlaufender Verdichterradaustrittskante) oder eine Kegelmantelfläche (bei zur Rotationsachse geneigter Verdichterradaustrittskante) stromab der Verdichterradaustrittskante 4. Ebenso kann die Diffusoreintrittsquerschnittsfläche A₃ eine Zylinderfläche (bei parallel zur Rotationsachse verlaufender Diffusoreintrittskante) oder eine Kegelmantelfläche (bei einer zur Rotationsachse geneigter Diffusoreintrittskante) sein. In diesem Zusammenhang sei darauf hingewiesen, dass die Querschnittsflächen des Strömungskanals die in Strömungsrichtung abnehmen, ein Minimum durchlaufen und wieder zunehmen, Zylinderflächen und/oder Kegelmantelflächen sein können.

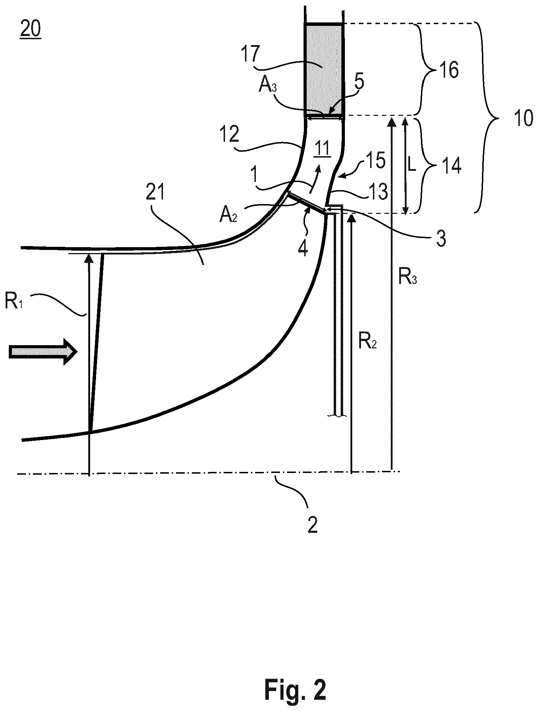

Gemäß einer Ausführungsform, die mit anderen hierin beschriebenen Ausführungsformen kombiniert werden kann, wie es beispielhaft in den Figuren 2 bis 5 gezeigt ist, kann in der nabenseitigen Seitenwand 13, insbesondere am Verdichterradaustritt, ein Spalt 3 (z.B. eine Leckströmungsöffnung) ausgebildet sein.

Gemäß einer Ausführungsform, die mit anderen hierin beschriebenen Ausführungsformen kombiniert werden kann, liegt das Minimum der Querschnittsflächen des Strömungskanals 11 in Strömungsrichtung bei einer radialen Position r_{Min}, die aus einem Bereich R₂ < r_{Min} ≤ R₂ + 0,8 × (R₃-R₂), insbesondere R₂ < r_{Min} ≤ R₂ + 0,6 × (R₃-R₂), ausgewählt ist. R₂ ist der Verdichterradaustrittsradius R₃ ist der radiale Abstand des Eintritts 5 in den Diffusorbereich zur Rotationsachse 2 des Verdichterrades 21.

Gemäß einer Ausführungsform, die mit anderen hierin beschriebenen Ausführungsformen kombiniert werden kann, ist ein Verhältnis VQ des Minimums der Querschnittsflächen des Strömungskanals 11 zur Verdichterradaustrittsquerschnittsfläche A₂ aus einem Bereich 0,8 ≤ VQ < 1, insbesondere 0,9 ≤ VQ < 1, ausgewählt.

Gemäß einer Ausführungsform, die mit anderen hierin beschriebenen Ausführungsformen kombiniert werden kann, weist der S-Schlag artige Bereich 15 einen Krümmungswechsel von der zur shroudseitigen Seitenwand 12 zeigenden konvexen Krümmung zur shroudseitigen Seitenwand 12 zeigende konkave Krümmung auf, der bei einer radialen Position r_{KW} liegt, die aus einem Bereich R₂ < r_{KW} ≤ R₂ +0,8 × (R₃-R₂), insbesondere R₂ < r_{KW} ≤ R₂ + 0,6 × (R₃-R₂), ausgewählt ist. R₂ ist der Verdichterradaustrittsradius und R₃ ist der radiale Abstand des Eintritts 5 in den Diffusorbereich zur Rotationsachse 2 des Verdichterrades 21.

Gemäß einer Ausführungsform, die mit anderen hierin beschriebenen Ausführungsformen kombiniert werden kann, weist die konvexe Krümmung ein Krümmungsmaximum an einer radialen Position r_{Kmax} auf, die aus einem Bereich R₂ < r_{Kmax} ≤ R₂ + 0,75 × (R₃-R₂), insbesondere R₂ < r_{Kmax} ≤ R₂ + 0,5× (R₃-R₂), ausgewählt ist. Unter Krümmungsmaximum ist der größte positive Krümmungswert zu verstehen. Gemäß einer Ausführungsform, die mit anderen hierin beschriebenen Ausführungsformen kombiniert werden kann, weist die konkave Krümmung ein Krümmungsminimum an einer radialen Position r_{Kmin} auf, die aus einem Bereich R₂ + 0,15 × (R₃-R₂) ≤ r_{Kmin} < R₃, insbesondere R₂ + 0,25 × (R₃-R₂) ≤ r_{Kmin} < R₃ ausgewählt. Unter Krümmungsminimum ist der größte negative Krümmungswert zu verstehen. In diesem Zusammenhang wird darauf hingewiesen, dass bei einer Auswahl von r_{Kmax} aus dem Bereich R₂ < r_{Kmax} ≤ R₂ + 0,75 × (R₃-R₂) und r_{Kmin} aus dem Bereich R₂ + 0,15 × (R₃-R₂) ≤ r_{Kmin} < R₃, typischerweise r_{Kmax} und r_{Kmin} derart gewählt werden, dass r_{Kmax <} r_{Kmin} ist.

Es wird darauf hingewiesen, dass in der vorliegenden Anmeldung die Querschnittsflächen des Strömungskanals die Meridionalquerschnittsflächen des Strömungskanals sind, insbesondere die Querschnittsflächen des Strömungskanals die sich in Normalrichtung zur Hauptströmungsrichtung erstrecken. Die Hauptströmungsrichtung verläuft entlang der Mittellinie zwischen der shroudseitigen Seitenwand 12 und der nabenseitigen Seitenwand 13.

Gemäß einem weiteren Aspekt der vorliegenden Offenbarung, wird ein Verdichter 20, insbesondere ein Radialverdichter oder ein Diagonalverdichter, bereitgestellt, der ein Verdichterrad 21 und einen Abströmbereich 10 gemäß den hierein beschriebenen Ausführungsformen umfasst.

Gemäß einer Ausführungsform, die mit anderen hierin beschriebenen Ausführungsformen kombiniert werden kann, weist das Verdichterrad 21 einen Verdichterradeintrittsradius R₁ und einem Verdichterradaustrittsradius R₂ auf. Ein Verhältnis des Verdichterradeintrittsradius R₁ zum Verdichterradaustrittsradius R₂ ist typischerweise aus einem Bereich von 0,65 ≤ R₁/R₂, insbesondere aus einem Bereich von 0,7≤ R₁/R₂, ausgewählt.

Gemäß einer Ausführungsform, die mit anderen hierin beschriebenen Ausführungsformen kombiniert werden kann, umfasst der Verdichter einen Diffusorbereich 16, der von einer Rotationsachse 2 des Verdichterrades 21 in einem radialen Abstand R₃ angeordnet ist. Typischerweise ist ein Verhältnis des radialen Abstands R₃ zum Verdichterradaustrittsradius R₂ aus einem Bereich von 1,05 < R₃/R₂ ≤ 1,30, insbesondere aus einem Bereich von 1,10 ≤ R₃/R₂ ≤ 1,25, ausgewählt.

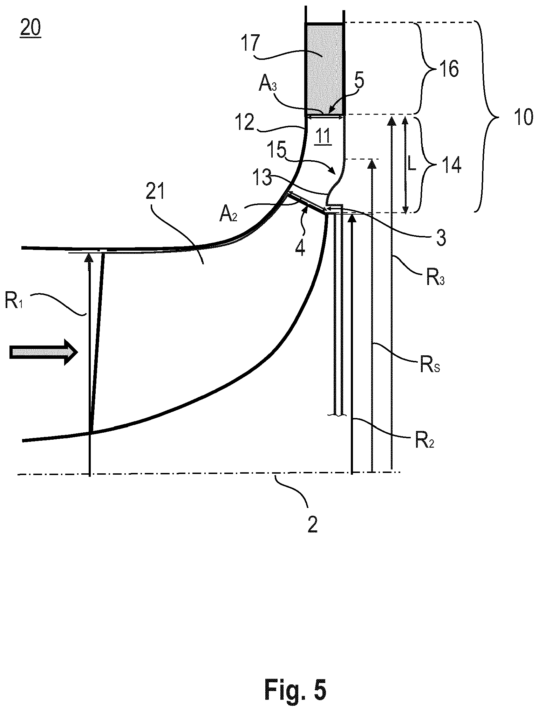

Gemäß einer Ausführungsform, die mit anderen hierin beschriebenen Ausführungsformen kombiniert werden kann, umfasst die Kontur der nabenseitigen Seitenwand 13 einen S-Schlag artigen Bereich 15 gemäß einer der hierin beschriebenen Ausfuhrungsformen. Wie beispielhaft in Figur 5 dargestellt ist kann der S-Schlag artige Bereich 15 in Strömungsrichtung ein Ende in einem Abstand Rs von der Rotationsachse 2 des Verdichterrades 21 aufweisen. Insbesondere kann der Abstand Rs, der Verdichterradaustrittsradius R₂ und der radialen Abstand R₃ des Diffusorbereichs 16 von der Rotationsachse 2 des Verdichterrades 21 derart ausgewählt sein, dass die Bedingung 0,4 ≤ (R_{S}-R₂)/(R₃-R₂) ≤1,0 erfüllt ist. In diesem Zusammenhang sei angemerkt, dass das Ende des S-Schlag artigen Bereichs 15 an dem Ort ist, an welchem die zur shroudseitigen Seitenwand 12 zeigende konkave Krümmung auf null zurückgeht.

Im Lichte vorliegenden Offenbarung kann somit gemäß einem weiteren Aspekt, ein Turbolader bereitgestellt werden, der einen Verdichter 20, insbesondere ein Radialverdichter oder ein Diagonalverdichter, gemäß den hierein beschriebenen Ausführungsformen, umfasst. In diesem Zusammenhang sei angemerkt, dass die Merkmale, die in Zusammenhang mit den beispielhaften Ausführungsformen des Radialverdichters (Figuren 2, 3 und 4) beschrieben sind auch auf die beispielhaften Ausführungsformen des Diagonalverdichters (Figuren 1 und 5) übertragen werden können und umkehrt.

Die hierein beschriebenen Ausführungsfonnen sind insbesondere vorteilhaft für hochschluckende Radial- bzw. Diagonalverdichter. Im Vergleich zum Stand der Technik, kann die Verdichterradabströmung vorteilhaft geführt, vergleichmäßigt und in geringem Bauraum stärker verzögert werden. Wird im Diffusor ein Leitgitter (Diffusorschaufeln) verwendet, so können entweder die Leitschaufeln näher ans Laufrad herangeschoben oder das Mach-Zahl-Niveau an den Diffusorschaufeleintrittskanten weiter reduziert werden. Die Reduktion der Machzahl sowie die Vergleichmäßigung der Diffusorschaufel-Anströmung führen zu einer Wirkungsgradsteigerung. Die Strömungsvergleichmäßigung sowie die Möglichkeit der Reduktion der shroudseitigen Kontur-Krümmung führen zu Stabilitätsverbesserungen. Durch die Reduktion des Bauraums können die Produktionskosten und die Kosten des Produkts gesenkt werden.

Mit anderen Worten, die hierin beschriebenen Ausführungsformen können folgende Vorteile aufweisen. Stetige, insbesondere tangentenstetige, als auch nicht stetige, insbesondere nicht-tangentenstetige, Hub-KonturVerläufe sind möglich, welche die Strömungsablösungsgefahr reduzieren und wirkungsgradmäßig vorteilhaft sind. Die Shroudkontur-Krümmung in der Meridionalansicht kann reduziert werden, ohne dass die Strömungsfläche zu stark reduziert wird. Die Strömungsablösungsgefahr an der Shroud kann so reduziert werden, ohne dass die Radialkomponente der Strömung im Mittel zu stark beschleunig wird. Der Flächenverlauf im Diffusor (stromab des Verdichterrads) kann gezielt so ausgelegt werden, dass der Impulsaustausch an der Shroud-Seite gefördert wird (durch Reduktion der Shroud-Krümmung sowie durch den mit der Hub- und Shroud-Kontur gebildeten Pinch-Bereich) und die Strömung am Hub (z.B. stromauf der Diffusorschaufelvorderkante) maximal verzögert wird. Somit kann die Verdichterradaustrittsströmung innerhalb eines kompakten Bauraums stark verzögert und vergleichmäßigt werden, ohne dass die Strömung beim Androsseln vorzeitig zum Ablösen und zur Instabilität neigt.

### BEZUGZEICHENLISTE

- 1: Strömungsrichtung
- 2: Rotationsachse
- 3: Spalt
- 4: Verdichterradaustrittskante
- 5: Eintritt in den Diffusorbereich
- 10: Abströmbereich
- 11: Strömungskanal
- 12: shroudseitge Seitenwand
- 13: nabenseitge Seitenwand
- 14: Bereich des Verdichterradaustritts
- 15: S-Schlag artige Kontur
- 16: Diffusorbereich
- 17: Diffusorschaufeln
- 20: Verdichter
- 21: Verdichterrad
- R₁: Verdichterradeintrittsradius
- R₂: Verdichterradaustrittsradius
- R₃: Radialer Abstand des Eintritts in den Diffusorbereich zur Rotationsachse
- R_{S}: Radialer Abstand des Endes des S-Schlag artigen Bereichs in Strömungsrichtung zur Rotationsachse
- S1,S2,S3,S4: Segmente der nabenseitigen Seitenwandkontur

## Patentansprüche

1. Abströmbereich (10) eines Verdichters (20), insbesondere eines Radialverdichters oder Diagonalverdichters, mit einem Strömungskanal (11), welcher von einer shroudseitigen Seitenwand (12) und einer nabenseitigen Seitenwand (13) begrenzt wird, wobei die nabenseitige Seitenwand (13) in einem Bereich (14) des Verdichterradaustritts eine Kontur aufweist, die derart ausgebildet ist, dass die Querschnittsflächen des Strömungskanals (11) in Strömungsrichtung (1) abnehmen, ein Minimum durchlaufen und wieder zunehmen, wobei der Strömungskanal (11) im Bereich (14) des Verdichterradaustritts eine Länge L aufweist, die sich von einer Verdichterradaustrittskante (4) bis zu einer Diffusorschaufeleintrittskante eines Diffusorbereichs (16) erstreckt, wobei sich der Diffusorbereich (16) an den Bereich (14) des Verdichterradaustritts anschließt und eine Vielzahl von Diffusorschaufeln (17) aufweist.

2. Abströmbereich (10) nach Anspruch 1, wobei die Kontur einen S-Schlag artigen Bereich (15) aufweist, insbesondere wobei der S-Schlag artige Bereich (15) durch mindestens drei Segmente, insbesondere Liniensegmente und/oder Kurvensegmente, gebildet wird, insbesondere wobei die Kontur mit dem S-Schlag artigen Bereich (15) tangentenstetig ist.

3. Abströmbereich (10) nach Anspruch 1 oder 2, wobei die nabenseitige Seitenwand (13) und/oder die shroudseitige Seitenwand (12) im Bereich des Verdichterradaustritts (14) stetige Konturverläufe aufweisen.

4. Abströmbereich (10) nach Anspruch 2 oder nach Anspruch 2 und 3, wobei der S-Schlag artige Bereich (15) näher an der Verdichterradaustrittskante als am Eintritt des Diffusorbereichs angeordnet ist, insbesondere nach der Verdichterradaustrittskante innerhalb 50% der Länge L des Strömungskanals (11) angeordnet ist.

5. Abströmbereich (10) nach einem der Ansprüche 1 bis 4, wobei der Strömungskanal (11) eine Verdichterradaustrittsquerschnittsfläche A2 und eine Diffusoreintrittsquerschnittsfläche A3 aufweist, wobei ein Verhältnis A3/A2 aus einem Bereich von 0,80 ≤ A3/A2 ≤ 1,2, insbesondere aus einem Bereich von 0,90 ≤ A3/A2 ≤ 1,1, ausgewählt ist.

6. Abströmbereich (10) nach einem der Ansprüche 1 bis 5, wobei in der nabenseitigen Seitenwand (13), insbesondere am Verdichterradaustritt, ein Spalt (3) ausgebildet ist.

7. Abströmbereich (10) nach Anspruch 2 oder nach Anspruch 2 in Kombination mit einem der Ansprüche 3 bis 6, wobei der S-Schlag artige Bereich (15) in Strömungsrichtung nach dem Verdichterradaustritt zunächst eine zur shroudseitigen Seitenwand (12) zeigende konvexe Krümmung und anschließend eine zur shroudseitigen Seitenwand (12) zeigende konkave Krümmung aufweist, insbesondere wobei die shroudseitige Seitenwand (12) im Bereich des Verdichterradaustritts ausschließlich konvex gegenüber der nabenseitigen Seitenwand (13) ausgebildet ist.

8. Abströmbereich nach einem der Ansprüche 1 bis 7, wobei das Minimum der Querschnittsflächen des Strömungskanals (11) in Strömungsrichtung bei einer radialen Position r_{Min} liegt, die aus einem Bereich R₂ < r_{Min} ≤ R₂ + 0,8 × (R₃-R₂), insbesondere R₂ < r_{Min} ≤ R₂ + 0,6 × (R₃-R₂), ausgewählt ist wobei R₂ der Verdichterradaustrittsradius ist, und wobei R₃ der radiale Abstand eines Eintritts (5) in den Diffusorbereich zur Rotationsachse (2) des Verdichterrades (21) ist.

9. Abströmbereich nach einem der Ansprüche 1 bis 8, wobei ein Verhältnis VQ des Minimums der Querschnittsflächen des Strömungskanals (11) zur Verdichterradaustrittsquerschnittsfläche A₂ aus einem Bereich 0,8 ≤ VQ < 1, insbesondere 0,9 ≤ VQ < 1 ausgewählt ist.

10. Abströmbereich nach Anspruch 7 oder nach Anspruch 7 in Kombination mit einem der Ansprüche 8 bis 9, wobei der S-Schlag artige Bereich (15) einen Krümmungswechsel von der zur shroudseitigen Seitenwand (12) zeigenden konvexen Krümmung zur shroudseitigen Seitenwand (12) zeigende konkave Krümmung aufweist, der bei einer radialen Position r_{KW} liegt, die aus einem Bereich R₂ < r_{KW} ≤ R₂ +0,8 × (R₃-R₂), insbesondere R₂ < r_{KW} ≤ R₂ + 0,6 × (R₃-R₂), ausgewählt ist, wobei R₂ der Verdichterradaustrittsradius ist, und wobei R₃ der radiale Abstand eines Eintritts (5) in den Diffusorbereich zur Rotationsachse (2) des Verdichterrades (21) ist.

11. Abströmbereich nach Anspruch 7 oder nach Anspruch 7 in Kombination mit einem der Ansprüche 8 bis 10, wobei die konvexe Krümmung ein Krümmungsmaximum an einer radialen Position r_{Kmax} aufweist, die aus einem Bereich R₂ < r_{Kmax} ≤ R₂ + 0,75 × (R₃-R₂), insbesondere R₂ < r_{Kmax} ≤ R₂ + 0,5 × (R₃-R₂), ausgewählt ist, und wobei die konkave Krümmung ein Krümmungsminimum an einer radialen Position r_{Kmin} aufweist, die aus einem Bereich R₂ + 0,15 × (R₃-R₂) ≤ r_{Kmin} < R₃, insbesondere R₂ + 0,25 × (R₃-R₂) ≤ r_{Kmin} < R₃ ausgewählt ist, wobei R₂ der Verdichterradaustrittsradius ist, wobei R₃ der radiale Abstand eines Eintritts (5) in den Diffusorbereich zur Rotationsachse (2) des Verdichterrades (21) ist, und wobei r_{Kmax} < r_{Kmin}.

12. Abströmbereich nach einem der Ansprüche 1 bis 11, wobei die Querschnittsflächen des Strömungskanals die Meridionalquerschnittsflächen des Strömungskanals sind, insbesondere wobei die Querschnittsflächen des Strömungskanals in Normalrichtung zur Hauptströmungsrichtung erstrecken, wobei die Hauptströmungsrichtung entlang der Mittellinie zwischen der shroudseitigen Seitenwand (12) und der nabenseitigen Seitenwand (13) verläuft.

13. Verdichter (20), insbesondere Radialverdichter oder Diagonalverdichter, mit einem Verdichterrad (21) und einem Abströmbereich (10) gemäß einem der Ansprüche 1 bis 12, insbesondere wobei das Verdichterrad (21) einen Verdichterradeintrittsradius R₁ und einem Verdichterradaustrittsradius R₂ aufweist, wobei ein Verhältnis R₁/R₂ aus einem Bereich von 0,65 ≤ R₁/R₂, insbesondere aus einem Bereich von 0,7≤ R₁/R₂, ausgewählt ist.

14. Verdichter (20) nach Anspruch 13, wobei der Diffusorbereich (16) von einer Rotationsachse (2) des Verdichterrades (21) in einem radialen Abstand R₃ angeordnet ist, wobei ein Verhältnis des radialen Abstands R₃ zum Verdichterradaustrittsradius R₂ aus einem Bereich von 1,05 ≤ R₃/R₂ < 1,30, insbesondere aus einem Bereich von 1,10 ≤ R₃/R₂ < 1,25 ausgewählt ist, insbesondere wobei die Kontur der nabenseitigen Seitenwand (13) einen S-Schlag artigen Bereich (15) umfasst, wobei der S-Schlag artigen Bereichs (15) in Strömungsrichtung ein Ende in einem Abstand R_{S} von der Rotationsachse (2) des Verdichterrades (21) umfasst, und wobei R_{S}, der Verdichterradaustrittsradius R₂ und der radialen Abstand R₃ des Diffusorbereichs (16) von der Rotationsachse (2) des Verdichterrades (21) derart ausgewählt sind, dass die Bedingung 0,4 ≤ (R_{S}-R₂)/(R₃-R₂) ≤1,0 erfüllt ist.

15. Turbolader mit einem Verdichter (20) nach einem der Ansprüche 13 bis 14.

## Claims

1. An outflow region (10) of a compressor (20), in particular of a radial compressor or diagonal compressor, having a flow channel (11) which is delimited by a shroud-side side wall (12) and a hub-side side wall (13), wherein the hub-side side wall (13) has, in a region (14) of the compressor wheel outlet, a contour which is designed in such a way that, in a flow direction (1), the cross-sectional areas of the flow channel (11) decrease, pass through a minimum and increase again, wherein, in the region (14) of the compressor wheel outlet, the flow channel (11) has a length L which extends from a compressor wheel outlet edge (4) to a diffuser vane inlet edge of a diffuser region (16), wherein the diffuser region (16) adjoins the region (14) of the compressor wheel outlet and has a multiplicity of diffuser vanes (17).

2. The outflow region (10) as claimed in claim 1, wherein the contour has an S-shaped region (15), in particular wherein the S-shaped region (15) is formed by at least three segments, in particular line segments and/or curve segments, in particular wherein the contour is tangent continuous with the S-shaped region (15).

3. The outflow region (10) as claimed in claim 1 or claim 2, wherein the hub-side side wall (13) and/or the shroud-side side wall (12) have continuous contour profiles in the region of the compressor wheel outlet (14).

4. The outflow region (10) as claimed in claim 2 or in claim 2 and 3, wherein the S-shaped region (15) is arranged closer to the compressor wheel outlet edge than to the inlet of the diffuser region, in particular is arranged within 50% of the length L of the flow channel (11) downstream of the compressor wheel outlet edge.

5. The outflow region (10) as claimed in any of claims 1 to 4, wherein the flow channel (11) has a compressor wheel outlet cross-sectional area A2 and a diffuser inlet cross-sectional area A3, wherein a ratio A3/A2 is selected from a range of 0.80 ≤ A3/A2 ≤ 1.2, in particular from a range of 0.90 ≤ A3/A2 ≤ 1.1.

6. The outflow region (10) as claimed in any of claims 1 to 5, wherein a gap (3) is formed in the hub-side side wall (13), in particular at the compressor wheel outlet.

7. The outflow region (10) as claimed in claim 2 or in claim 2 in combination with any of claims 3 to 6, wherein, downstream of the compressor wheel outlet in the flow direction, the S-shaped region (15) has first of all a convex curvature facing the shroud-side side wall (12) and then a concave curvature facing the shroud-side side wall (12), in particular wherein the shroud-side side wall (12) is designed to be exclusively convex relative to the hub-side side wall (13) in the region of the compressor wheel outlet.

8. The outflow region as claimed in any of claims 1 to 7, wherein the minimum of the cross-sectional areas of the flow channel (11) in the flow direction lies at a radial position r_{Min}, which is selected from a range R₂ < r_{Min} ≤ R₂ + 0.8 × (R₃-R₂), in particular R₂ < r_{Min} ≤ R₂ + 0.6 × (R₃-R₂), wherein R₂ is the compressor wheel outlet radius, and wherein R₃ is the radial distance of an inlet (5) into the diffuser region from the axis of rotation (2) of the compressor wheel (21).

9. The outflow region as claimed in any of claims 1 to 8, wherein a ratio VQ of the minimum of the cross-sectional areas of the flow channel (11) to the compressor wheel outlet cross-sectional area A₂ is selected from a range 0.8 ≤ VQ < 1, in particular 0.9 ≤ VQ < 1.

10. The outflow region as claimed in claim 7 or in claim 7 in combination with any of claims 8 to 9, wherein the S-shaped region (15) has a change in curvature from the convex curvature facing the shroud-side side wall (12) to the concave curvature facing the shroud-side side wall (12) which lies at a radial position r_{KW} which is selected from a range R₂ < r_{KW} ≤ R₂ + 0.8 × (R₃-R₂), in particular R₂ < r_{KW} ≤ R₂ + 0.6 × (R₃-R₂), where R₂ is the compressor wheel outlet radius, and where R₃ is the radial distance of an inlet (5) into the diffuser region from the axis of rotation (2) of the compressor wheel (21).

11. The outflow region as claimed in claim 7 or in claim 7 in combination of any of claims 8 to 10, wherein the convex curvature has a maximum curvature at a radial position r_{Kmax}, which is selected from a range R₂ < r_{Kmax} ≤ R₂ + 0.75 × (R₃-R₂), in particular R₂ < r_{Kmax} ≤ R₂ + 0.5× (R₃-R₂), and wherein the concave curvature has a minimum curvature at a radial position r_{Kmin}, which is selected from a range R₂ + 0.15 × (R₃-R₂) ≤ r_{Kmin} < R₃, in particular R₂ + 0.25 × (R₃-R₂) ≤ r_{Kmin} < R₃, wherein R₂ is the compressor wheel outlet radius, wherein R₃ is the radial distance of an inlet (5) into the diffuser region from the axis of rotation (2) of the compressor wheel (21), and wherein r_{Kmax} < r_{Kmin}.

12. The outflow region as claimed in any of claims 1 to 11, wherein the cross-sectional areas of the flow channel are the meridional cross-sectional areas of the flow channel, in particular wherein the cross-sectional areas of the flow channel extend in the normal direction to the main flow direction, wherein the main flow direction runs along the center line between the shroud-side side wall (12) and the hub-side side wall (13).

13. A compressor (20), in particular a radial compressor or a diagonal compressor, having a compressor wheel (21) and an outflow region (10) as claimed in any of claims 1 to 12, in particular wherein the compressor wheel (21) has a compressor wheel inlet radius R₁ and a compressor wheel outlet radius R₂, wherein a ratio R₁/R₂ is selected from a range of 0.65 ≤ R₁/R₂, in particular from a range of 0.7 ≤ R₁/R₂.

14. The compressor (20) as claimed in claim 13, wherein the diffuser region (16) is arranged at a radial distance R₃ from an axis of rotation (2) of the compressor wheel (21), wherein a ratio of the radial distance R₃ to the compressor wheel outlet radius R₂ is selected from a range of 1.05 ≤ R₃/R₂ ≤ 1.30, in particular from a range of 1.10 ≤ R₃/R₂ ≤ 1.25, in particular, wherein the contour of the hub-side side wall (13) comprises an S-shaped region (15), wherein the S-shaped region (15) comprises, in the flow direction, an end at a distance R_{S} from the axis of rotation (2) of the compressor wheel (21), and wherein Rs, the compressor wheel outlet radius R₂ and the radial distance R₃ of the diffuser region (16) from the axis of rotation (2) of the compressor wheel (21) are selected in such a way that the condition 0.4 ≤ (R_{S}-R₂)/(R₃-R₂) ≤ 1.0 is satisfied.

15. A turbocharger having a compressor (20) as claimed in any of claims 13 to 14.

## Revendications

1. Zone d'écoulement (10) d'un compresseur (20), en particulier d'un compresseur radial ou d'un compresseur diagonal, comportant un canal d'écoulement (11), lequel est délimité par une paroi latérale (12) côté enveloppe et une paroi latérale (13) côté moyeu, la paroi latérale (13) côté moyeu présentant, dans une zone (14) de la sortie de roue de compresseur, un contour qui est formé de telle sorte que les surfaces de section transversale du canal d'écoulement (11) diminuent dans la direction d'écoulement (1), passent par un minimum et augmentent à nouveau, le canal d'écoulement (11) présentant, dans la zone (14) de la sortie de roue de compresseur, une longueur L qui s'étend à partir d'une arête de sortie de roue de compresseur (4) jusqu'à une arête d'entrée d'aube de diffuseur d'une zone de diffuseur (16), la zone de diffuseur (16) se raccordant à la zone (14) de la sortie de roue de compresseur et présentant une pluralité d'aubes de diffuseur (17).

2. Zone d'écoulement (10) selon la revendication 1, le contour présentant une zone (15) en forme de S, en particulier la zone (15) en forme de S étant formée par au moins trois segments, en particulier des segments de ligne et/ou des segments de courbe, en particulier le contour présentant une continuité de tangente avec la zone (15) en forme de S.

3. Zone d'écoulement (10) selon la revendication 1 ou 2, la paroi latérale (13) côté moyeu et/ou la paroi latérale (12) côté enveloppe présentant, dans la zone de la sortie de roue de compresseur (14), des allures de contour continues.

4. Zone d'écoulement (10) selon la revendication 2 ou selon les revendications 2 et 3, la zone (15) en forme de S étant disposée plus près de l'arête de sortie de roue de compresseur que de l'entrée de la zone de diffuseur, en particulier étant disposée près de l'arête de sortie de roue de compresseur dans 50% de la longueur L du canal d'écoulement (11).

5. Zone d'écoulement (10) selon l'une des revendications 1 à 4, le canal d'écoulement (11) présentant une surface de section transversale de sortie de roue de compresseur A2 et une surface de section transversale d'entrée de diffuseur A3, un rapport A3/A2 étant sélectionné dans une plage de 0,80 ≤ A3/A2 ≤ 1,2, en particulier dans une plage de 0,90 ≤ A3/A2 ≤ 1,1.

6. Zone d'écoulement (10) selon l'une des revendications 1 à 5, un espace (3) étant formé dans la paroi latérale (13) côté moyeu, en particulier au niveau de la sortie de roue de compresseur.

7. Zone d'écoulement (10) selon la revendication 2 ou selon la revendication 2 en combinaison avec l'une des revendications 3 à 6, la zone (15) en forme de S présentant, en aval de la sortie de roue de compresseur dans la direction d'écoulement, tout d'abord une courbure convexe tournée vers la paroi latérale (12) côté enveloppe et ensuite une courbure concave tournée vers la paroi latérale (12) côté enveloppe, en particulier la paroi latérale (12) côté enveloppe, dans la zone de la sortie de roue de compresseur, étant formée exclusivement de manière convexe par rapport à la paroi latérale (13) côté moyeu.

8. Zone d'écoulement selon l'une des revendications 1 à 7, le minimum des surfaces de section transversale du canal d'écoulement (11) dans la direction d'écoulement se situant à une position radiale r_{Min} qui est sélectionnée dans une plage de R₂ < r_{Min} ≤ R₂ + 0,8 x (R₃-R₂), en particulier de R₂ < r_{Min} ≤ R₂ + 0,6 × (R₃-R₂), R₂ étant le rayon de sortie de roue de compresseur, et R₃ étant la distance radiale d'une entrée (5) dans la zone de diffuseur à l'axe de rotation (2) de la roue de compresseur (21).

9. Zone d'écoulement (10) selon l'une des revendications 1 à 8, un rapport VQ du minimum des surfaces de section transversale du canal d'écoulement (11) à la surface de section transversale de sortie de roue de compresseur A₂ étant sélectionné dans une plage de 0,8 ≤ VQ < 1, en particulier de 0,9 ≤ VQ < 1.

10. Zone d'écoulement selon la revendication 7 ou selon la revendication 7 en combinaison avec l'une des revendications 8 à 9, la zone (15) en forme de S présentant un changement de courbure de la courbure convexe tournée vers la paroi latérale (12) côté enveloppe à la courbure concave tournée vers la paroi latérale (12) côté enveloppe, lequel se situe à une position radiale r_{Kw} qui est sélectionnée dans une plage de R₂ < r_{Kw} ≤ R₂ + 0,8 x (R₃-R₂), en particulier de R₂ < r_{KW} ≤ R₂ + 0,6 × (R₃-R₂), R₂ étant le rayon de sortie de roue de compresseur, et R₃ étant la distance radiale d'une entrée (5) dans la zone de diffuseur à l'axe de rotation (2) de la roue de compresseur (21).

11. Zone d'écoulement selon la revendication 7 ou selon la revendication 7 en combinaison avec l'une des revendications 8 à 10, la courbure convexe présentant un maximum de courbure à une position radiale r_{Kmax} qui est sélectionnée dans une plage de R₂ < r_{Kmax} ≤ R₂ + 0,75 × (R₃-R₂), en particulier de R₂ < r_{Kmax} ≤ R₂ + 0,5 × (R₃-R₂), et la courbure concave présentant un minimum de courbure à une position radiale r_{Kmin} qui est sélectionnée dans une plage de R₂ + 0,15 × (R₃-R₂) ≤ r_{Kmin} < R₃, en particulier de R₂ + 0,25 × (R₃-R₂) ≤ r_{Kmin} < R₃, R₂ étant le rayon de sortie de roue de compresseur, R₃ étant la distance radiale d'une entrée (5) dans la zone de diffuseur à l'axe de rotation (2) de la roue de compresseur (21) et où r_{Kmax} < r_{Kmin}.

12. Zone d'écoulement selon l'une des revendications 1 à 11, les surfaces de section transversale du canal d'écoulement étant les surfaces de section transversale méridionales du canal d'écoulement, en particulier les surfaces de section transversale du canal d'écoulement s'étendant dans la direction normale par rapport à la direction d'écoulement principale, la direction d'écoulement principale s'étendant le long de la ligne centrale entre la paroi latérale (12) côté enveloppe et la paroi latérale (13) côté moyeu.

13. Compresseur (20), en particulier compresseur radial ou compresseur diagonal, comportant une roue de compresseur (21) et une zone d'écoulement (10) selon l'une des revendications 1 à 12, en particulier la roue de compresseur (21) présentant un rayon d'entrée de roue de compresseur R₁ et un rayon de sortie de roue de compresseur R₂, un rapport R₁/R₂ étant sélectionné dans une plage de 0,65 ≤ R₁/R₂, en particulier dans une plage de 0,7 ≤ R₁/R₂.

14. Compresseur (20) selon la revendication 13, la zone de diffuseur (16) étant disposée à une distance radiale R₃ d'un axe de rotation (2) de la roue de compresseur (21), un rapport de la distance radiale R₃ au rayon de sortie de roue de compresseur R₂ étant sélectionné dans une plage de 1,05 ≤ R₃/R₂ ≤ 1,30, en particulier dans une plage de 1,10 ≤ R₃/R₂ ≤ 1,25, en particulier le contour de la paroi latérale (13) côté moyeu comprenant une zone (15) en forme de S, la zone (15) en forme de S présentant, dans la direction d'écoulement, une extrémité à une distance R_{S} de l'axe de rotation (2) de la roue de compresseur (21), et R_{S}, le rayon de sortie de roue de compresseur R₂ et la distance radiale R₃ de la zone de diffuseur (16) à l'axe de rotation (2) de la roue de compresseur (21) étant sélectionnés de telle sorte que la condition 0,4 ≤ (R_{S}-R₂)/(R₃-R₂) ≤ 1,0 soit remplie.

15. Turbocompresseur comportant un compresseur (20) selon l'une des revendications 13 à 14.
